(19) Europäisches Patentamt
European Patent Office
Office européen des brevets

(11) **EP 2 447 292 B1**

(12) **EUROPÄISCHE PATENTSCHRIFT**

(45) Veröffentlichungstag und Bekanntmachung des Hinweises auf die Patenterteilung:
**29.03.2017   Patentblatt 2017/13**

(51) Int Cl.:
*C08F 220/06* (2006.01)     *C08L 33/02* (2006.01)

(21) Anmeldenummer: **10189433.5**

(22) Anmeldetag: **29.10.2010**

(54) **WASSERLÖSLICHES BZW. IN WASSER DESINTEGRIERBARES COPOLYMER**

WATER SOLUBLE COPOLYMER WHICH DISINTEGRATES IN WATER

COPOLYMÈRE SOLUBLE DANS L'EAU OU POUVANT ÊTRE DÉSINTÉGRÉ DANS L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2012   Patentblatt 2012/18**

(73) Patentinhaber: **BellandTechnology AG**
**91278 Pottenstein (DE)**

(72) Erfinder:
• **Rugieri, Juan-Carlos**
**71460 Joncy (Rains) (FR)**
• **Leder, Herbert**
**76547 Sinzheim (DE)**
• **Osan, Frank, Dr.**
**65779 Kelkheim im Taunus (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
| | |
|---|---|
| EP-A1- 0 344 589 | EP-B1- 0 928 316 |
| WO-A2-2010/045147 | CN-A- 1 154 375 |
| GB-A- 833 571 | US-A- 4 196 272 |
| US-A- 6 013 421 | US-A1- 2002 115 739 |

EP 2 447 292 B1

**Beschreibung**

Die Erfindung betrifft ein Copolymer auf Basis von Acrylsäure und ein Copolymercompound, umfassend das Copolymer und einen Schlägzähmodifikator sowie Verfahren zu deren Herstellung.

Wasserlöslichen Polymeren kommt heutzutage als Rohmaterialien, Halbteile oder Fertigteile auf vielen technischen Gebieten eine besondere Bedeutung zu.

Grundsätzlich lassen sich wasserlösliche Polymere in natürliche Polymere wie beispielsweise Proteine und Polysaccharide, halbsynthetische Polymere (bearbeitete bzw. modifizierte natürliche Polymere) wie beispielsweise Cellulose- und Stärkederivate sowie in vollsynthetische Polymere unterteilen. Bei letzteren handelt es sich um Polymere, welche ausgehend von niedermolekularen Ausgangsstoffen, sogenannten Monomeren, synthetisiert werden.

Vollsynthetisch hergestellte, wasserlösliche Polymere sind vor allem auf dem Gebiet der Medizin, Pharmazie, Kosmetik, Papierverarbeitung, Wasseraufbereitung, Erdölförderung, Klebstoffe sowie der Polyelektrolyte von Bedeutung.

So werden beispielsweise Acrylpolymere wie Polyacrylsäure zur Herstellung von Hydrogelen und Superabsorbern verwendet. Polyacrylamid spielt eine wichtige Rolle bei der Wasserreinigung und Erdölförderung. Daneben kommt es auch als Flockungsmittel zum Einsatz. Polymethacrylsäure wird beispielsweise in der Kosmetik und als Gerbstoff verwendet.

Vinylpolymere wie beispielsweise Polyvinylalkohol werden insbesondere zur Herstellung von Klebstoffen und Emulgatoren verwendet. Daneben sind sie auch für die Papier- und Textilindustrie von Bedeutung.

Die Polymere Polyvinylamin, Polyvinylmethylether, Polyvinylpyrrolidon und deren Copolymere werden beispielsweise für Klebstoffe, Augentropfen sowie Blutplasmaersatz verwendet.

Polyvinylmethylacetamid und Polyvinylsulfonsäure werden hauptsächlich in der Haarkosmetik sowie als Katalysatormaterialien verwendet.

Polyoxide, Polyimine, Polyethylenimine, Polyethylenamine stellen bevorzugte Ionenaustauschermaterialien dar und werden darüber hinaus bei der Papierverarbeitung eingesetzt. Polyoxyethylen ist Bestandteil zahlreicher Kosmetika und von Zahnpasta. Darüber hinaus wird Polyoxyethylen auch auf dem Gebiet der Biomedizin verwendet.

Polyethylenoxazolin wird in der Medizin sowie bei der Herstellung von Klebstoffen verwendet.

Polyamidsulfonate werden beispielsweise für Bohrspülungen und Zementierungen von Bohrlöchern eingesetzt.

Manche der vorstehend beschriebenen wasserlöslichen, vollsynthetischen Polymere haben jedoch den Nachteil, dass sie lediglich beschränkt oder überhaupt nicht in der Schmelze verarbeitbar sind, zumindest jedoch nicht ohne die Gefahr einer Zersetzung.

Ein in wässrigem Alkali auflösbares Co- bzw. Terpolymer sowie ein darauf basierendes Compound sind aus der EP 0 928 316 B1 bekannt.

Aus der US 2002/0115739 A1 ist eine aushärtbare Zusammensetzung mit einem Vinylcopolymer-Harz bekannt, welches neben Acrylsäure- und Ethylmethacrylateinheiten aus Glycidylmethacrylateinheiten zusammengesetzt ist.

Gegenstand der GB 833,571 ist ein Copolymer, welches überwiegend aus Acrylsäure- und/oder Methacrylsäureeinheiten und in geringeren Gewichtsanteilen aus 2-Ethylhexylacrylat- und/oder Methacrylateinheiten besteht.

Die US 4,196,272 betrifft ein Verfahren zur Herstellung eines Copolymers aus Vinylcarbonsäuren und Methyl- oder Ethylacrylat.

Die EP 0 344 589 A1 offenbart die Verwendung von wasserlöslichen Polymerisaten, welche durch Lösungspolymerisation von Acrylsäure, Methacrylsäure, Hydroxyethylacrylat, Hydroxypropylacrylat oder deren Mischungen und ggf. anderen monoethylenisch ungesättigten Verbindungen erhältlich sind, als Klebstoff.

Aus der CN 1154375 A ist eine Polymerzusammensetzung bekannt, welche ein Polymer mit einem Molekulargewicht von 1.000 - 30.000 enthält, wobei das Polymer Monomereinheiten einer ungesättigten Carbonsäure, Monomereinheiten einer Dicarbonsäure und Monomereinheiten eines Acrylsäureesters/Methacrylsäureesters enthält.

Die US 6,013,421 offenbart einen mehrschichtigen Artikel, welcher eine neutralisierende Schicht aufweist, welche ein Copolymer aus Acrylsäure- und Butylacrylateinheiten in einem Molverhältnis von 8:3 mit einem durchschnittlichen Molekulargewicht von 50.000 enthält.

Gegenstand der WO 2010/045147 A2 ist ein Trägermaterial, welches Carbonsäuregruppen aufweisende Monomereinheiten, Phenylgruppen aufweisende Monomereinheiten sowie einen Schlagzähmodifizierer enthält.

Der vorliegenden Erfindung liegt nun die Aufgabe zugrunde, ein in der Schmelze im Wesentlichen ohne Zersetzungsphänomene verarbeitbares Polymer bereitzustellen, welches zudem insbesondere in wässrig neutraler Umgebung löslich ist, zumindest jedoch in wässrig neutraler Umgebung desintegriert werden kann.

Diese Aufgabe wird erfindungsgemäß gelöst durch ein Copolymer auf Basis von Acrylsäure, wobei das Copolymer eine Molmasse, ausgedrückt als Gewichtsmittel und mittels Gelpermeationschromatographie bestimmt, < 100 000 g/mol aufweist und neben der Acrylsäure als Comonomer einen Ester einer a-ß-ungesättigten Monocarbonsäure aufweist, dadurch gekennzeichnet, dass die Acrylsäure einen Gewichtsanteil > 50 Gew.-%, bezogen auf das Gesamtgewicht des Copolymers, und eine molekulare Uneinheitlichkeit zwischen 2 und 5 aufweist.

Unter einem Copolymer soll im Sinne der vorliegenden Erfindung grundsätzlich ein Polymer verstanden werden, welches aus zwei oder mehr verschiedenartigen Monomertypen bzw. Monomereinheiten zusammengesetzt ist.

Die Molmasse bzw. molare Masse des Copolymers wird gemäß der vorliegenden Erfindung vorzugsweise ausgedrückt als Gewichtsmittel. Das Gewichtsmittel stellt allgemein neben dem Zahlen-, dem Zentrifugenund dem Viskositätsmittel eine der wichtigsten Kenngrößen eines Polymers bzw. makromolekularen Stoffes dar. Für seine Beschreibung wird zunächst der sogenannte Gewichtsbruch $w_i$ definiert:

$$w_i = (N_i M_i)/[\textstyle\sum(N_i M_i)]$$

Der Gewichtsbruch $w_i$ gibt den Gewichtsanteil an Polymermolekülen bzw. Makromolekülen in einer Probe an, die aus i Repetiereinheiten (z.B. Monomerbausteinen) bestehen, die Molmasse $M_i$ besitzen und in der Probe $N_i$-mal vorkommen. Für das Gewichtsmittel der Molmasse $M_w = \sum w_i M_i$ gilt damit:

$$M_w = [\textstyle\sum(N_i M_i^2)]/[\textstyle\sum(N_i M_i)].$$

Es zeigt sich, dass das Gewichtsmittel einer Polymerprobe bei derjenigen Molmasse liegt, dessen Polymermoleküle den hinsichtlich ihrer Masse größten relativen Anteil in der Probe stellen.

Die Molmasse des erfindungsgemäßen Copolymers wird vorzugsweise mittels Gelpermeationschromatographie (GPC) bestimmt.

Überraschenderweise stellte sich heraus, dass ein Copolymer, welches auf Acrylsäure basiert bzw. hauptsächlich aus Monomeren der Acrylsäure synthetisiert bzw. hergestellt ist, bevorzugt mittels Lösungspolymerisation, und eine Molmasse < 100 000 g/mol besitzt, ohne Probleme thermoplastisch verarbeitet werden kann, und insbesondere in neutral wässriger Umgebung löslich, zumindest jedoch desintegrierbar, ist.

Unter einem wasserlöslichen Copolymer soll im Sinne der vorliegenden Erfindung ein in Wasser vollständig, überwiegend oder nur teilweise lösliches Copolymer verstanden werden.

Unter einem in Wasser desintegrierbaren Copolymer soll im Sinne der vorliegenden Erfindung insbesondere ein Copolymer verstanden werden, welches in Wasser quellbar, suspendierbar, dispergierbar oder mittels Wasser entfernbar, beispielsweise fortspülbar, abwaschbar oder dergleichen, ist.

In einer bevorzugten Ausführungsform ist das Copolymer ein vollständig, zumindest jedoch überwiegend, wasserlösliches Copolymer.

Das Copolymer ist in einer weiteren Ausführungsform in Wasser löslich bzw. in Wasser desintegrierbar, das einen pH-Wert von 5 bis 13, bevorzugt 6 bis 8, weiter bevorzugt 6,5 bis 7,5, besonders bevorzugt von ca. 7, aufweist. Mit anderen Worten ist es erfindungsgemäß besonders bevorzugt, wenn das Copolymer in einer wässrig neutralen pH-Umgebung löslich bzw. desintegrierbar ist. Ergänzend oder alternativ hierzu kann das Copolymer aber auch in wässrig saurer und/oder in wässrig alkalischer bzw. basischer Umgebung löslich oder wenigstens desintegrierbar sein.

Vorzugsweise ist das Copolymer bei Raumtemperatur in Wasser löslich oder in Wasser desintegrierbar. Um die Löslichkeit in Wasser zu unterstützen bzw. zu beschleunigen oder zu vervollständigen, kann es erfindungsgemäß von Vorteil sein, das Copolymer in Wasser zu erwärmen.

In einer vorteilhaften Ausführungsform liegt die molare Masse bzw. Molmasse des Copolymers zwischen 25 000 g/mol und 90 000 g/mol, insbesondere 30 000 g/mol und 85 000 g/mol, bevorzugt 35 000 g/mol und 75 000 g/mol.

Wie vorstehend bereits erwähnt, basiert das Copolymer auf Acrylsäure. Der Ausdruck "Copolymer auf Basis von Acrylsäure" meint im Sinne der vorliegenden Erfindung, dass die Acrylsäure die Hauptkomponente des Copolymers darstellt und einen Gewichtsanteil von > (gesprochen: größer) 50 Gew.-%, bezogen auf das Gesamtgewicht des Copolymers, aufweist.

Die Acrylsäure weist in einer weitergehenden Ausführungsform einen Gewichtsanteil zwischen 60 Gew.-% und 95 Gew.-%, insbesondere 70 Gew.-% und 90 Gew.-%, bevorzugt 75 Gew.-% und 85 Gew.-%, auf, bezogen auf das Gesamtgewicht des Copolymers.

Wie bereits erwähnt, basiert das Copolymer auf Acrylsäure (Propensäure bzw. nach IUPAC (International Union of Pure and Applied Chemistry): Prop-2-ensäure).

Bevorzugt weist das Copolymer neben der Acrylsäure ein Comonomer auf. Unter einem Comonomer soll im Sinne der vorliegenden Erfindung ein Monomer verstanden werden, welches neben der Acrylsäure am Aufbau des Copolymers beteiligt ist bzw. zur Synthese des Copolymers verwendet wird.

Das Comonomer ist ein Ester einer $\alpha$-$\beta$-ungesättigten Monocarbonsäure. Insoweit stellte sich erfindungsgemäß weiterhin überraschend heraus, dass durch Copolymerisieren von Acrylsäure und eines Esters einer $\alpha$-$\beta$-ungesättigten

Monocarbonsäure, vorzugsweise in Lösung, ein Copolymer erhalten wird, dessen Glasübergangstemperatur (Tg) so weit erniedrigt ist, dass ein Schmelzen des Copolymers unterhalb seiner Zersetzungstemperatur möglich ist. Dadurch lässt sich das Copolymer mit besonderem Vorteil thermoplastisch verarbeiten und ist insbesondere mittels Formgebungsverfahren wie beispielsweise Extrusion, Spritzguss oder dergleichen weiter verarbeitbar.

Besonders bevorzugt handelt es sich bei dem Ester um einen Alkylund/oder Alkoxyalkylester einer $\alpha$-$\beta$-ungesättigten Monocarbonsäure. Erfindungsgemäß kann es insbesondere vorgesehen sein, dass der Ester einen Alkoholrest, bevorzugt einen linearen Alkoholrest, besonders bevorzugt einen linearen und aliphatischen Alkoholrest, mit einer Kohlenstoffanzahl von 2 bis 8 Kohlenstoffatomen, insbesondere 2 bis 6 Kohlenstoffatomen, vorzugsweise 2 bis 4 Kohlenstoffatomen, aufweist.

Der Ester der $\alpha$-$\beta$-ungesättigten Monocarbonsäure ist in einer weitergehenden Ausführungsform ausgewählt aus der Gruppe umfassend Alkylacrylate, Alkoxyalkylacrylate, Epoxyalkylacrylate, Alkylmethacrylate, Alkoxyalkylmethacrylate, Epoxyalkylmethacrylate und Mischungen davon.

Beispielsweise kann der Ester der $\alpha$-$\beta$-ungesättigten Monocarbonsäure ausgewählt sein aus der Gruppe umfassend Methylacrylat, Ethylacrylat, n-Butylacrylat, iso-Butylacrylat, Methoxyethylacrylat, Ethoxyethylacrylat, Ethoxybutylacrylat, Glycidylacrylat, Methylmethacrylat, Ethylmethacrylat, n-Butylmethacrylat, iso-Butylmethacrylat, Methoxyethylmethacrylat, Ethoxyethylmethacrylat, Ethoxybutylmethacrylat, Glycidylmethacrylat und Mischungen davon.

Alkylacrylate, insbesondere Butylacrylat, sind als Comonomer besonders bevorzugt, da das Copolymer hierdurch weicher wird, was für viele Verwendungszwecke, insbesondere für die im Folgenden noch aufgeführten Verwendungszwecke, von Vorteil ist.

Der Ester der $\alpha$-$\beta$-ungesättigten Monocarbonsäure weist in einer weiteren Ausführungsform einen Gewichtsanteil zwischen 5 Gew.-% und 40 Gew.-%, insbesondere 10 Gew.-% und 30 Gew.-%, bevorzugt 15 Gew.-% und 25 Gew.-%, auf, bezogen auf das Gesamtgewicht des Copolymers.

Besonders bevorzugt ist ein Copolymer aus Acrylsäure und einem Ester einer $\alpha$-$\beta$-ungesättigten Monocarbonsäure. Bezüglich weiterer Merkmale und Einzelheiten zu dem Ester der $\alpha$-$\beta$-ungesättigten Monocarbonsäure wird vollumfänglich auf die bisherige Beschreibung Bezug genommen.

Das Copolymer liegt in einer weiteren Ausführungsform als Lösungscopolymer bzw. Lösungscopolymerisat vor. Unter einem Lösungscopolymer bzw. Lösungscopolymerisat soll im Sinne der vorliegenden Erfindung ein Copolymer verstanden werden, welches mittels Lösungspolymerisation synthetisiert bzw. hergestellt ist. Der Vorteil einer Lösungspolymerisation liegt insbesondere darin, dass sich das hieraus resultierende Copolymer durch eine enge Molmassenverteilung und insbesondere durch eine niedrige Molmasse auszeichnet. Durch die niedrigere Molmasse besitzt das Copolymer mit besonderem Vorteil eine bessere Wasserlöslichkeit bzw. Desintegrierbarkeit in Wasser, wodurch die Verarbeitbarkeit und insbesondere Verwendungsmöglichkeiten des Copolymers erheblich verbessert werden.

Das Copolymer ist in einer weiteren vorteilhaften Ausführungsform amorph, vorzugsweise vollständig amorph.

Wie bereits erwähnt, ist das Copolymer mit besonderem Vorteil ein in der Schmelze verarbeitbares Copolymer. Vorzugsweise ist das Copolymer thermoplastisch verarbeitbar, insbesondere bis zu einer Temperatur von 200°C, bevorzugt bis zu einer Temperatur von 220°C, besonders bevorzugt bis zu einer Temperatur von 240°C. Dadurch ist insbesondere auch eine Verarbeitung des Copolymers in konventionellen Kunststoffverarbeitungsmaschinen in der Regel ohne Schwierigkeiten möglich.

Mit besonderem Vorteil weist das Copolymer eine Glasübergangstemperatur ($T_G$) zwischen 60 °C und 140 °C, insbesondere 80 °C und 120 °C, vorzugsweise 100 °C und 120 °C, auf. Erfindungsgemäß ist grundsätzlich eine Glasübergangstemperatur > 100 °C bevorzugt.

Um die thermoplastische Verarbeitbarkeit des Copolymers zu begünstigen, ist es erfindungsgemäß weiterhin bevorzugt, wenn das Copolymer einen möglichst hohen Schmelzflussindex besitzt, da durch die thermische Belastung die Fließfähigkeit des Copolymers generell verschlechtert wird.

Der Schmelzflussindex (Melt Flow Index, MFI), gemessen in g/10 min, dient allgemein der Charakterisierung des Fließverhaltens eines Thermoplasten bei bestimmten Druck- und Temperaturbedingungen. Der Schmelzflussindex stellt allgemein ein Maß für die Viskosität einer Polymerschmelze dar, woraus insbesondere auf die Molmassenverteilung, beispielsweise ausgedrückt als Gewichtsmittel, des Polymers geschlossen werden kann. Der Schmelzflussindex wird in der Regel mittels eines Kapillarrheometers bestimmt, wobei das Polymer, gewöhnlich als Granulat oder Pulver vorliegend, in einem beheizbaren Zylinder aufgeschmolzen und unter einem durch eine Auflagelast entstehenden Druck durch eine definierte Düse bzw. Kapillare gedrückt wird. Bestimmt wird hierbei das austretende Volumen bzw. die austretende Masse der Polymerschmelze (des sogenannten Extrudats) als Funktion der Zeit.

Das Copolymer gemäß der vorliegenden Erfindung weist bevorzugt einen Schmelzflussindex zwischen 5 g/10 min und 50 g/10 min, insbesondere 10 g/10 min und 45 g/10 min, vorzugsweise 15 g/10 min und 30 g/10 min, auf.

Das Copolymer weist weiterhin eine molekulare Uneinheitlichkeit zwischen 2 und 5, insbesondere 2 und 4, vorzugsweise 2 und 3, auf. Unter der molekularen Uneinheitlichkeit (Breite der Molekulargewichtsverteilung) soll im Sinne der vorliegenden Erfindung der Quotient aus dem Gewichtsmittel der Molmasse des Copolymers und dem Zahlenmittel der Molmasse des Copolymers verstanden werden. Die molekulare Uneinheitlichkeit stellt dabei ein Maß für die viskoelastischen Eigenschaften bzw. für die Fließfähigkeit des Copolymers dar.

Das im vorherigen Absatz erwähnte Zahlenmittel ($M_n$) der Molmasse stellt, wie bereits erwähnt, eine weitere wichtige Kenngröße für ein Polymer bzw. einen makromolekularen Stoff dar und lässt sich durch die folgende Formel definieren:

$$M_n = \sum N_i \, M_i / \sum N_i,$$

wobei $N_i$ die Zahl der Polymer- bzw. Makromoleküle in einer Probe mit genau i Repetiereinheiten und der Molmasse $M_i$ ist.

In einer weiteren vorteilhaften Ausführungsform ist das Copolymer frei von intramolekularen Anhydridstrukturen oder im Wesentlichen frei von intramolekularen Anhydridstrukturen. In diesem Zusammenhang ist Acrylsäure besonders vorteilhaft, da die Carboxylgruppen der Acrylsäure erst oberhalb der für Polyacrylsäure typischen Verarbeitungstemperaturen, insbesondere erst bei einer Temperatur von ca. 270 °C, zu einer intramolekularen Anhydridbildung neigen.

Um das Copolymer zu flexibilisieren bzw. um die Flexibilität des Copolymers zu erhöhen, kann es erfindungsgemäß weiterhin bevorzugt sein, dass das Copolymer mit einem Schlagzähmodifikator bzw. Schlagzähmodifizierer versehen bzw. compoundiert ist.

Der Schlägzähmodifikator beeinflusst in der Regel die Glasübergangstemperatur des Copolymers nicht, zumindest jedoch nicht wesentlich. Für gewöhnlich bewirkt der Schlagzähmodifikator eine Erniedrigung des MFI des Copolymers.

Abhängig von der Natur des Schlägzähmodifikators kann dieser die Wasserlöslichkeit des Copolymers bzw. die Desintegrierbarkeit des Copolymers in Wasser erhöhen.

Vorzugsweise ist das Copolymer mit einem gegenüber Carboxylgruppen reaktiven Schlagzähmodifikator versehen bzw. compoundiert.

Der Schlagzähmodifikator weist in einer weitergehenden Ausführungsform gegenüber Carboxylgruppen reaktive Gruppen auf, welche ausgewählt sind aus der Gruppe umfassend Epoxygruppen, Aminogruppen, primäre Amingruppen, sekundäre Amingruppen, tertiäre Amingruppen und Kombinationen davon. Bevorzugt ist ein Epoxy- und/oder Aminogruppen, besonders bevorzugt ein Epoxygruppen, aufweisender Schlagzähmodifikator.

Der Schlagzähmodifikator weist in einer besonders bevorzugten Ausführungsform Epoxygruppen tragende Monomereinheiten wie beispielsweise Glycidylacrylat- und/oder Glycidylmethacrylatmonomereinheiten auf.

Der Schlagzähmodifikator kann weiterhin einen Gewichtsanteil an Epoxygruppen tragenden Monomereinheiten von maximal 10 Gew.-%, bevorzugt maximal 6 Gew.-%, besonders bevorzugt maximal 4 Gew.-%, aufweisen, bezogen auf das Gesamtgewicht des Schlagzähmodifikators.

Der Schlagzähmodifikator ist in einer weiteren vorteilhaften Ausführungsform wenigstens teilweise, insbesondere nur teilweise, kovalent mit Carboxylgruppen des Copolymers, insbesondere mit Carboxylgruppen der Acrylsäure, verknüpft. Die kovalente Verknüpfung basiert vorzugsweise auf der Ausbildung von Ester- und/oder Amidgruppen.

Der Schlagzähmodifikator ist in der Regel ein Polymer, insbesondere ein Co- oder Terpolymer. Bevorzugt ist der Schlagzähmodifikator ausgewählt aus der Gruppe umfassend Styrol-Blockcopolymere, Styrol-Blockterpolymere, Copolymere mit einer Core-Shell-Struktur (Kern-Hülle-Struktur), Terpolymere mit einer Core-Shell-Struktur (Kern-Hülle-Struktur), Epoxygruppen aufweisende Copolymere, Epoxygruppen aufweisende Terpolymere, Maleinsäureanhydridgruppen aufweisende Copolymere, Maleinsäureanhydridgruppen aufweisende Terpolymere, Ethylen-Copolymere, Butadien-Blockterpolymere, thermoplastische Polyester, Polybutadien bzw. Co- oder Terpolymere davon, Nitril-Butadien-Kautschuk und Mischungen, insbesondere Blends, davon.

Geeignete Styrol-Blockcopolymere bzw. Styrol-Blockterpolymere können beispielsweise ausgewählt sein aus der Gruppe umfassend StyrolButadien-Copolymer, Styrol-Ethylen-Butadien-Terpolymer, StyrolButadien-Styrol-Blockterpolymer, Styrol-Isopren-Butadien-Terpolymer und Mischungen, insbesondere Blends, davon.

Geeignete Co- bzw. Terpolymere mit einer Core-Shell-Struktur bzw. Kern-Hülle-Struktur können beispielsweise aus der Gruppe umfassend Styrol-Butylacrylat-Copolymer, Styrol-Butadien-Methylmethacrylat-Terpolymer und Mischungen, insbesondere Blends, davon ausgewählt sein. Bevorzugt sind Co- und/oder Terpolymere mit einer Kern-Hülle-Struktur, deren Kern Polybutadien und/oder ein Copolymer, umfassend Butadien und/oder Styrol, aufweist.

Geeignete Maleinsäureanhydridgruppen aufweisende Copolymere sind beispielsweise aus der Gruppe umfassend Methylacrylat-Maleinsäureanhydrid-Copolymer, Vinylacetat-Maleinsäureanhydrid-Copolymer und Mischungen, insbesondere Blends, davon ausgewählt. Weitere geeignete Schlägzähmodifikatoren stellen beispielsweise Copolymere dar, welche Ethoxyethylacrylat, Ethoxybutylacrylat, Ethoxymethacrylat oder Mischungen davon (als Monomereinheiten) umfassen.

Ein besonders bevorzugter Schlagzähmodifikator ist ein Terpolymer, umfassend Ethylen-, Acrylsäurebutylester- (Butylacrylat-) und Glycidylmeth-acrylatmonomereinheiten.

Ein weiterer bevorzugter Schlagzähmodifikator stellt ein Terpolymer dar, welches Ethylen-, Vinylacetat- und Glycidylmethacrylatmonomereinheiten umfasst.

Der Schlagzähmodifikator weist in einer weiteren vorteilhaften Ausführungsform einen Gewichtsanteil zwischen 10 Gew.-% und 40 Gew.-%, insbesondere 12 Gew.-% und 30 Gew.-%, bevorzugt 15 Gew.-% und 25 Gew.-%, auf, bezogen auf das Gesamtgewicht des mit dem Schlagzähmodifikator versehenen bzw. compoundierten Copolymers.

Grundsätzlich kann das Copolymer mit weiteren Additiven wie beispielsweise Weichmachern, Dispergiermitteln, Gleitmitteln, Füllstoffen, Stabilisatoren, Farbstoffen oder dergleichen versehen bzw. compoundiert sein.

Geeignete Weichmacher sind beispielsweise aus der Gruppe umfassend Dialkylphthalate, Cycloalkylphthalate, Benzyl- und/oder Arylphthalate, Alkoxyphthalate, Alkyl- und/oder Arylphosphate, Carboxylsäureester, Polyglykolester, Adipinsäureester, Zitronensäureester, Glycerinester und Mischungen davon ausgewählt.

In einer grundsätzlich möglichen Ausführungsform ist das Copolymer abgesehen von einem Schlagzähmodifikator mit keinen weiteren Additiven, insbesondere mit keinem Dispergier- und/oder Gleitmittel, versehen bzw. compoundiert.

Die Erfindung umfasst weiterhin ein Verfahren zur Herstellung des Copolymers, bei welchem Acrylsäure und ein Ester einer $\alpha$-$\beta$-ungesättigten Monocarbonsäure in Lösung copolymerisiert werden. Mit anderen Worten wird das Copolymer mittels einer Lösungspolymerisation hergestellt. Die Lösungspolymerisation hat neben dem Erhalt von Copolymeren mit einer niedrigeren Molmasse den allgemeinen Vorteil, dass die entstehende Reaktionswärme leicht abgeführt werden kann und zudem eine kontinuierliche Prozessführung möglich ist. Außerdem lassen sich mittels der Lösungspolymerisation mit besonderem Vorteil Umsätze zwischen 90% und 100% erzielen.

Zur Copolymerisation werden die Acrylsäure und das Comonomer bevorzugt in einem Lösungsmittel gelöst. Das Lösungsmittel ist zweckmäßigerweise ein niedrig siedendes Lösungsmittel, insbesondere ein Lösungsmittel mit einem Siedepunkt unterhalb von 100 °C (bei Normaloder Standardbedingungen). Lösungsmittelgemische können ebenfalls verwendet werden. Bevorzugte Lösungsmittel sind Alkohole wie beispielsweise Ethanol, n-Propanol, iso-Propanol, Butanol oder Gemische davon.

Um die Copolymerisation zu starten, weist die Lösung in der Regel einen geeigneten Polymerisationsstarter, insbesondere einen Radikalstarter wie beispielsweise Dilaurylperoxid oder Dibenzoylperoxid (DBPO) auf.

Um den Polymerisationsgrad des entstehenden Copolymers zu begrenzen und/oder die Polymerisationsgeschwindigkeit zu bremsen, kann es weiterhin von Vorteil sein, wenn die Lösung eine Reglersubstanz (Regler) aufweist. Geeignete Reglersubstanzen können beispielsweise aus der Gruppe umfassend Merkaptane wie beispielsweise 1-Dodecanthiol, Halogenmethane wie beispielsweise Trichlormethan und/oder Tetrachlormethan, Aldehyde, Acetale, $\alpha$-Methylstyrol-Dimer und Mischungen davon ausgewählt sein.

Die Copolymerisation wird in einer weiteren Ausführungsform bei einer Temperatur durchgeführt, die im Wesentlichen dem Siedepunkt des verwendeten Lösungsmittels entspricht, insbesondere in einem Temperaturbereich zwischen 45 °C und 130 °C, bevorzugt 50 °C und 120 °C, besonders bevorzugt 60 °C und 100 °C.

Bezüglich weiterer Merkmale und Vorteile, insbesondere in Bezug auf die Acrylsäure und/oder das Comonomer, wird vollständig auf die bisherige Beschreibung Bezug genommen.

Ein weiterer Aspekt der vorliegenden Erfindung betrifft ein Copolymercompound, welches das erfindungsgemäße Copolymer sowie einen Schlagzähmodifikator umfasst.

Unter einem Copolymercompound soll im Sinne der vorliegenden Erfindung eine Mischung des Copolymers mit wenigstens einem Schlagzähmodifikator verstanden werden. Erfindungsgemäß kann es daher durchaus vorgesehen sein, dass das Compound neben dem Schlagzähmodifikator noch mit weiteren Additiven, insbesondere mit Additiven der bereits beschriebenen Art, versehen bzw. compoundiert ist.

Das Copolymercompound ist in einer bevorzugten Ausführungsform zweiphasig ausgebildet. Die Zweiphasigkeit des Compounds liegt in der Regel daran, dass das Copolymer und der Schlagzähmodifikator als Schmelzen nicht miteinander verträglich, d.h. nicht miteinander mischbar, sind.

Bevorzugt liegt das Copolymer als kontinuierliche Phase und der Schlagzähmodifikator als diskontinuierliche, vorzugsweise feindisperse, Phase vor. Durch die Erzeugung einer Dispersion des geschmolzenen Schlagzähmodifikators in einer kontinuierlichen Phase des Copolymers werden mit besonderem Vorteil lediglich begrenzte Berührungsflächen zwischen den beiden Schmelzen erzeugt. Bei Aufrechterhaltung einer solchen begrenzten Berührungsfläche zwischen den beiden Phasen wird gewährleistet, dass nur im Grenzbereich Interaktionen, insbesondere Verknüpfungsreaktionen, zwischen dem Copolymer und dem Schlagzähmodifikator möglich sind.

Der Schlagzähmodifikator weist vorzugsweise einen Gewichtsanteil zwischen 10 Gew.-% und 40 Gew.-%, insbesondere 12 Gew.-% und 30 Gew.-%, bevorzugt 15 Gew.-% und 25 Gew.-%, auf, bezogen auf das Gesamtgewicht des Compounds.

Bevorzugt weist das Copolymer in dem Copolymercompound eine Glasübergangstemperatur auf, die gleich oder im Wesentlichen gleich ist der Glasübergangstemperatur des nicht compoundierten Copolymers. Der Ausdruck "im Wesentlichen gleich" bedeutet an dieser Stelle, dass eine Temperaturabweichung von - 5 °C bis + 5 °C grundsätzlich möglich sein kann.

In einer weitergehenden Ausführungsform weist das Copolymercompound wenigstens zwei, insbesondere zwei, Glasübergangstemperaturen auf, wovon eine Glasübergangstemperatur auf das Copolymer und die andere Glasübergangstemperatur auf den Schlagzähmodifikator zurückgeht.

In einer weiteren bevorzugten Ausführungsform weist das Copolymercompound einen niedrigeren Schmelzflussindex auf als das nicht compoundierte Copolymer. So kann das Copolymercompound einen Schmelzflussindex zwischen 1,5 g/10 min und 20 g/10 min, insbesondere 2 g/10 min und 17 g/10 min, bevorzugt 2 g/10 min und 12 g/10 min, aufweisen.

In einer weiteren vorteilhaften Ausführungsform weist das Copolymercompound in einer wässrigen, pH-neutralen Umgebung und/oder wässrigen, alkalischen Umgebung eine bessere Löslichkeit auf als das nicht compoundierte Copolymer.

Die vorliegende Erfindung betrifft schließlich auch ein Verfahren zur Herstellung des Copolymercompounds, bei welchem ein erfindungsgemäßes Copolymer in der Schmelze mit einem Schlagzähmodifikator unter Einwirkung von Scherkräften vermischt wird, wobei das Mengenverhältnis von Copolymer und Schlagzähmodifikator vorzugsweise derart gewählt wird, dass das Copolymer die kontinuierliche Phase und der Schlagzähmodifikator die diskontinuierliche Phase bildet.

Bevorzugt werden hierzu Copolymer und Schlagzähmodifikator in festem Zustand, beispielsweise in Granulatform, vorgemischt und anschließend gemeinsam aufgeschmolzen. Das Aufschmelzen kann dabei bereits unter gegenseitiger Vermischung erfolgen. Für die Vermischung können beispielsweise Zwei-Schnecken-Extruder, insbesondere solche mit gleichlaufenden Schnecken, verwendet werden. Die Teilchengröße des Schlagzähmodifikators kann durch Wahl der Mischtemperatur, der Mischdauer und der auf die Schmelze einwirkenden Scherkräfte eingestellt werden. Die Scherkräfte hängen insbesondere ab von der Geometrie eines Mischers, beispielsweise von der Schneckengeometrie eines Extruders, von der Drehzahl eines Mischers und/oder der Temperatur und damit der Viskosität der Schmelze. Die Zugabe eines Dispergiermittels wie beispielsweise eines Silikonöls kann die Scherung verstärken und zu einer Verkleinerung der Partikelgrößen des Schlagzähmodifikators führen. Ein weiterer wichtiger Faktor stellt die Zeit dar, die vorzugsweise möglichst kurz gehalten wird und in der Regel unter 10 Minuten liegt. Üblicherweise weist der Schlagzähmodifikator eine niedrigere Schmelztemperatur auf als das Copolymer und beginnt deshalb beim Aufheizen zuerst zu schmelzen.

Bevorzugt erfolgt das Vermischen von Copolymer und Schlagzähmodifikator bei einer Temperatur im Bereich zwischen 170 °C und 240 °C, insbesondere 180 °C und 230 °C, vorzugsweise 190 °C und 210 °C. Nach einer anfänglichen Grobdispergierung kann, wie vorstehend erwähnt, ein Dispergiermittel zugegeben werden, um eine Feindispergierung zu beschleunigen. Katalysatoren werden vorzugsweise nicht zugegeben, um den Umfang der Reaktion zwischen dem Copolymer und dem Schlagzähmodifikator zu begrenzen. Zur Begrenzung einer solchen Reaktion kann jedoch ein Gleitmittel, insbesondere gegen Ende des Mischvorganges, zugegeben werden.

Bezüglich weiterer Merkmale und Vorteile, insbesondere in Bezug auf das Copolymer und/oder den Schlagzähmodifikator, wird vollumfänglich auf die bisherige Beschreibung Bezug genommen.

Das Copolymercompound bzw. das dem Compound zugrundeliegende Copolymer kann grundsätzlich als Pulver, Granulat, Halbteil, Fertigteil, Tiefziehteil, Spritzgussteil, Extrusionsgegenstand, Strang, Profil oder Folie, beispielsweise Verpackungsfolie, vorliegen. Besonders bevorzugt liegt das Copolymer als wasserlösliches Stützmaterial bzw. wasserlösliche Stützmatrix, insbesondere zur Verwendung auf dem Gebiet des Rapid Prototyping (schneller Prototypenbau), insbesondere zur Anwendung bei dreidimensionalen Druckprozessen (3D Printing), vor. Unter dreidimensionalen Druckprozessen versteht man allgemein die Herstellung von dreidimensionalen Gegenständen ausgehend von Polymeren, wobei die Dreidimensionalität der Gegenstände mittels auf Computern gespeicherten CAD-Daten (Computer-Aided Design-Daten) erzeugt wird. Weitere Merkmale und Einzelheiten der Erfindung ergeben sich aus der nachfolgenden Beschreibung von Ausführungsbeispielen in Verbindung mit den Unteransprüchen. Hierbei können einzelne Merkmale jeweils für sich alleine oder zu mehreren in Kombination miteinander bei einer Ausführungsform der Erfindung verwirklicht sein.

**1. Beispiel: Copolymerisation von Acrylsäure und Butylacrylat**

Ein Dreihals-Kolben mit einem Fassungsvermögen von 2 Liter, ausgestattet mit einem Glasthermometer, einem Schlangenkühler und einem Rührer, wurde in ein Thermobad gestellt. Danach wurde der Kolben mit 200 g Ethanol, 40 g Butylacrylat, 160 g Acrylsäure und 1,5 g α-Methylstyrol-Dimer befüllt. Das Thermobad wurde auf eine Temperatur von ca. 83°C und der Rührer auf eine Rührgeschwindigkeit von 160 Umdrehungen/min. (UPM) eingestellt. Bei einer Massetemperatur von ca. 77°C erfolgte die Zugabe von 3 g Perkadox LB 75 (Initiator). Die Massetemperatur stieg in den folgenden 30 Minuten auf maximal 83°C und sank danach wieder auf eine Temperatur von 77°C. Nach vier Stunden wurde die Polymerisation beendet. Das Lösungsmittel wurde im Vakuumofen bei 100°C verdampft. Anschließend wurde die erhaltene Probe während einer halben Stunde im Ofen bei ca. 220°C getrocknet. Das auf diese Weise hergestellte Copolymer besaß die folgenden Eigenschaften:

Anteil an freien Carboxylgruppen: 40,8 %, bezogen auf das Gesamtgewicht des Copolymers

| | |
|---|---|
| M: | 46 000 g/mol |
| $M_n$: | 17 000 g/mol |
| $T_g$: | 108°C |

Brabender Drehmoment bei 220 °C, 60 UPM nach 15 min : 580 kpm (Kilopondmeter)
Schmelzindex bei 200°C/5 kg: 8,3 g/10 min.

**2. Wasserlösliche Acrylat-Polymere**

Tabelle 1

| Acrylat-Polymer | $T_g$ [°C] | Verhalten bei thermoplastischer Verarbeitung |
|---|---|---|
| PAA | 170-188 | instabil |
| PAS | 131-150 | instabil |
| PMAS | 180-200 | instabil |

Legende zu Tabelle 1 :

PAA:  Polyacrylamid
PAS:  Polyacrylsäure
PMAS:  Polymethacrylsäure
$T_g$:  Glasübergangstemperatur

Die Tabelle 1 zeigt, dass aus dem Stand der Technik bekannte wasserlösliche Acrylat-Polymere den Nachteil besitzen, dass sie bei ihren Verarbeitungstemperaturen instabil sind. Demgegenüber zeichnen sich erfindungsgemäße Copolymere mit besonderem Vorteil dadurch aus, dass sie ohne Probleme thermoplastisch verarbeitbar und zusätzlich wasserlöslich, jedoch zumindest in Wasser desintegrierbar sind (vergleiche hierzu auch die noch folgenden Tabellen 2 und 3).

**3. Glasübergangstemperatur und Löslichkeit von erfindungsgemäßen Copolymeren in Wasser**

Tabelle 2

| Copolymer | Monomerzusammensetzung | Gewichtsanteil der Monomere | Löslichkeit in neutralem Wasser bei 20°C | $T_g$ [°C] |
|---|---|---|---|---|
| 1 | MEA-AS | 20:80 | Q | 142 |
| 2 | BA-AS | 20:80 | Q | 112 |
| 3 | MA-AS | 20:80 | LK | 117 |
| 4 | BMA-AS | 20:80 | LK | 128 |
| 5 | IBMA-AS | 20:80 | LK | 127 |
| 6 | EMA-AS | 20:80 | LK | 126 |
| 7 | MMA-AS | 20:80 | LK | 128 |
| 8 | PAS | 100 | LK | 131-150 |
| 9 | PMAS | 100 | U | 180-200 |

EP 2 447 292 B1

Legende zu Tabelle 2:

| Q: | in Wasser quellbar bzw. mittels Wasser abwaschbar |
| LK: | klare Lösung |
| U: | unlöslich |
| MEA: | Methoxyethylacrylat |
| BA: | Butylacrylat |
| AS: | Acrylsäure |
| MA: | Methylacrylat |
| BMA: | Butylmethacrylat |
| IBMA: | iso-Butylmethacrylat |
| EMA: | Ethylmethacrylat |
| MMA: | Methylmethacrylat |
| PAS: | Polyacrylsäure |
| PMAS: | Polymethacrylsäure |
| $T_g$: | Glasübergangstemperatur |

Die in Tabelle 2 dargestellten Ergebnisse zeigen zum Einen, dass die erfindungsgemäßen Copolymere (Copolymere 1 bis 7) überwiegend in Wasser löslich, zumindest jedoch in Wasser quellbar bzw. mittels Wasser abwaschbar sind. Zum Anderen zeigen die Ergebnisse auch, dass sich die erfindungsgemäßen Copolymere durch eine Glasübergangstemperatur auszeichnen, die weit unter ihren Zersetzungstemperaturen liegt, wodurch ihre thermoplastische Bearbeitbarkeit wie beispielsweise Extrudierfähigkeit verbesssert bzw. überhaupt erst möglich wird. Insbesondere zeichnen sich die erfindungsgemäßen Copolymere mehrheitlich durch eine Glasübergangstemperatur aus, die niedriger ist als die Glasübergangstemperatur von herkömmlichen Homoacrylpolymeren (Homopolymere 8 und 9), wodurch ihre thermoplastische Verarbeitbarkeit gegenüber diesen Homoacrylpolymeren entscheidend verbessert wird.

**4. weitere wasserlösliche Copolymere**

Tabelle 3

| Copolymer | **Monomerzusammensetzung** | Gewichtsanteil der Monomere | COOH % | $M_w$ (g/mol) /d($M_W$/$M_n$) | MFI 200°C/10 kg | Tg [°C] | Löslichkeit. in $H_2O$ bei RT |
|---|---|---|---|---|---|---|---|
| 1 | MEA/AS | 20/80 | | 80.000/ 2.9 | 14 | 142 | S, K |
| | EMA/AS | 20/80 | 37 | 65.000/ 4.6 | 8 | 123 | K |
| 2 | MMA/AS | 20/80 | 36 | 35.000/ 2.5 | 6 | 123 | K |
| 3 | MA/AS | 20/80 | | 70.000/ 2.4 | | 105 | S |
| 4 | BA/AS | 20/80 | 40 | 61.000/ 3.4 | 14 | 106 | T |
| | BA/AS(b) | 20/80 | 43 | 56.000/ 2.8 | 15 | 110 | T |
| 5 | BA/AS | 40/60 | 32 | 44.000/ 2.6 | 42 | 82 | $T_W$ |

Legende zu Tabelle 3:
L löslich
S schnell löslich
K Lösung klar
T leicht trübe Lösung
$T_W$ Teilweise gelöst
$T_g$: Glasübergangstemperatur
$M_W$: Molmasse
$M_n$: zahlenmittlere Molmasse
d: Breite der Molmassenverteilung
RT: Raumtemperatur
MFI: Schmelzflussindex

Der in oben stehender Tabelle 3 in Prozent angegebene Anteil an freien Carboxylgruppen bezieht sich auf das Gesamtgewicht des Copolymers.

Die in oben stehender Tabelle 3 angegebene Breite der Molekulargewichtsverteilung d ist das Verhältnis aus Molmasse bzw. Molekulargewicht und zahlenmittlere Molmasse bzw. zahlenmittleres Molekulargewicht.

Der in oben stehender Tabelle 3 angegebene Schmelzflussindex MFI wurde bei einer Temperatur von 200°C und einer Auflagelast von 10 kg gemessen.

Auch die in der Tabelle 3 wiedergebenen Daten belegen, dass die erfindungsgemäßen Copolymere vollständig wasserlöslich oder wenigstens in Wasser desintegrierbar sind und gleichzeitig eine Glasübergangstemperatur aufweisen, die ein Aufschmelzem unterhalb der Stabilitätsgrenze ermöglicht.

**5. Bestimmung der Molmassen**

Die Molmassen der erfindungsgemäßen Copolymere wurden mittels Gelpermeationschromatographie (GPC) bestimmt, wobei das Eluationsvolumen der in THF gelösten Copolymere mit dem Eluationsvolumen eines in THF gelösten Eichpolymers verglichen wurden. Als Chromatographiesäulen wurden GPC-Säulen von Shodex und ein Kontron HPLC UV-Detektor 430 verwendet (Standard: PSS Ready Cal. Standards, Hochmolekular von Polymer Standards Service, Mainz Molekularsieb Union Carbide Typ 4A, Auswertung PSS Win-GPC).

**Patentansprüche**

1. Copolymer auf Basis von Acrylsäure, wobei das Copolymer eine Molmasse, ausgedrückt als Gewichtsmittel und mittels Gelpermeationschromatographie bestimmt, < 100 000 g/mol aufweist und neben der Acrylsäure als Comonomer einen Ester einer $\alpha$-$\beta$-ungesättigten Monocarbonsäure aufweist, **dadurch gekennzeichnet, dass** die Acrylsäure einen Gewichtsanteil > 50 Gew.-%, bezogen auf das Gesamtgewicht des Copolymers, und eine molekulare Uneinheitlichkeit zwischen 2 und 5 aufweist.

2. Copolymer nach Anspruch 1, **dadurch gekennzeichnet, dass** die Molmasse zwischen 25 000 g/mol und 90 000 g/mol, insbesondere 30 000 g/mol und 85 000 g/mol, bevorzugt 35 000 g/mol und 75 000 g/mol, liegt.

3. Copolymer nach Anspruch 1 oder 2, **dadurch gekennzeichnet, dass** die Acrylsäure einen Gewichtsanteil zwischen 60 Gew.-% und 95 Gew.-%, insbesondere 70 Gew.-% und 90 Gew.-%, bevorzugt 75 Gew.-% und 85 Gew.-%, aufweist, bezogen auf das Gesamtgewicht des Copolymers.

4. Copolymer nach einem der vorhergehenden Ansprüche, **dadurch gekennzeichnet, dass** das Copolymer neben der Acrylsäure als Comonomer einen Alkyl- und/oder Alkoxyalkylester einer $\alpha$-$\beta$-ungesättigten Monocarbonsäure aufweist.

5. Copolymer nach einem der vorhergehenden Ansprüche, **dadurch gekennzeichnet, dass** der Ester der $\alpha$-$\beta$-ungesättigten Monocarbonsäure ausgewählt ist aus der Gruppe umfassend Methylacrylat, Ethylacrylat, n-Butylacrylat, iso-Butylacrylat, Methoxyethylacrylat, Glycidyl-acrylat, Methylmethacrylat, Ethylmethacrylat, n-Butylmethacrylat, iso-Butylmethacrylat, Methoxyethylmethacyrlat, Glycidylmethacrylat und Mischungen davon.

6. Copolymer nach einem der vorhergehenden Ansprüche, **dadurch gekennzeichnet, dass** der Ester einen Gewichtsanteil zwischen 5 Gew.-% und 40 Gew.-%, insbesondere 10 Gew.-% und 30 Gew.-%, bevorzugt 15 Gew.-% und 25 Gew.-%, aufweist, bezogen auf das Gesamtgewicht des Copolymers.

7. Copolymer nach einem der vorhergehenden Ansprüche, **dadurch gekennzeichnet, dass** das Copolymer ein Copolymer aus der Acrylsäure und dem Ester der $\alpha$-$\beta$-ungesättigten Monocarbonsäure ist.

8. Copolymer nach einem der vorhergehenden Ansprüche, **dadurch gekennzeichnet, dass** das Copolymer als Lösungscopolymerisat bzw. Lösungscopolymer vorliegt.

9. Copolymer nach einem der vorhergehenden Ansprüche, **dadurch gekennzeichnet, dass** das Copolymer eine Glasübergangstemperatur zwischen 60 °C und 140 °C, insbesondere 80 °C und 120 °C, vorzugsweise 100 °C und 120 °C, aufweist.

**10.** Copolymer nach einem der vorhergehenden Ansprüche, **dadurch gekennzeichnet, dass** das Copolymer in einer wässrigen, pHneutralen Umgebung und/oder in einer wässrigen, alkalischen Umgebung desintegrierbar oder löslich oder im Wesentlichen löslich ist.

**11.** Copolymer nach einem der vorhergehenden Ansprüche, **dadurch gekennzeichnet, dass** das Copolymer mit einem Schlagzähmodifikator, vorzugsweise mit einem gegenüber Carboxylgruppen reaktiven Schlagzähmodifikator, vorzugsweise mit einem Epoxyund/oder Aminogruppen aufweisenden Schlagzähmodifikator, versehen bzw. compoundiert ist.

**12.** Copolymer nach Anspruch 11, **dadurch gekennzeichnet, dass** der Schlagzähmodifikator einen Gewichtsanteil zwischen 10 Gew.-% und 40 Gew.-%, insbesondere 12 Gew.-% und 30 Gew.-%, bevorzugt 15 Gew.-% und 25 Gew.-%, aufweist, bezogen auf das Gesamtgewicht des mit dem Schlagzähmodifikators versehenen bzw. compoundierten Copolymers.

**13.** Verfahren zur Herstellung eines Copolymers nach einem der vorhergehenden Ansprüche, bei welchem Acrylsäure und ein Ester einer $\alpha$-$\beta$-ungesättigten Monocarbonsäure in Lösung copolymerisiert werden.

**14.** Copolymercompound, umfassend ein Copolymer nach einem der Ansprüche 1 bis 10 und einen Schlagzähmodifikator.

**15.** Verfahren zur Herstellung eines Copolymercompounds nach Anspruch 14, bei welchem ein Copolymer in der Schmelze mit einem Schlagzähmodifikator unter Einwirkung von Scherkräften vermischt wird, wobei das Mengenverhältnis von Copolymer und Schlagzähmodifikator vorzugsweise derart gewählt wird, dass das Copolymer die kontinuierliche Phase und der Schlagzähmodifikator die diskontinuierliche Phase bildet.

**Claims**

**1.** Copolymer based on acrylic acid, wherein the copolymer has a molar mass, expressed as a weight average and determined by means of gel permeation chromatography, of < 100 000 g/mol, and in addition to the acrylic acid has as comonomer an ester of an $\alpha$-$\beta$-unsaturated monocarboxylic acid, **characterized in that** the acrylic acid has a weight fraction of > 50% by weight, based on the total weight of the copolymer, and a molecular polydispersity of between 2 and 5.

**2.** Copolymer according to Claim 1, **characterized in that** the molar mass is between 25 000 g/mol and 90 000 g/mol, more particularly 30 000 g/mol and 85 000 g/mol, preferably 35 000 g/mol and 75 000 g/mol.

**3.** Copolymer according to Claim 1 or 2, **characterized in that** the acrylic acid has a weight fraction of between 60% by weight and 95% by weight, more particularly 70% by weight and 90% by weight, preferably 75% by weight and 85% by weight, based on the total weight of the copolymer.

**4.** Copolymer according to any of the preceding Claims, **characterized in that** the copolymer has in addition to the acrylic acid as comonomer an alkyl ester and/or alkoxy alkyl ester of an $\alpha$-$\beta$-unsaturated monocarboxylic acid.

**5.** Copolymer according to any of the preceding Claims, **characterized in that** the ester of the $\alpha$-$\beta$-unsaturated monocarboxylic acid is selected from the group encompassing methyl acrylate, ethyl acrylate, n-butyl acrylate, isobutyl acrylate, methoxyethyl acrylate, glycidyl acrylate, methyl methacrylate, ethyl methacrylate, n-butyl methacrylate, isobutyl methacrylate, methoxyethyl methacrylate, glycidyl methacrylate and mixtures thereof.

**6.** Copolymer according to any of the preceding Claims, **characterized in that** the ester has a weight fraction of between 5% by weight and 40% by weight, more particularly 10% by weight and 30% by weight, preferably 15% by weight and 25% by weight, based on the total weight of the copolymer.

**7.** Copolymer according to any of the preceding Claims, **characterized in that** the copolymer is a copolymer of the acrylic acid and the ester of an $\alpha$-$\beta$-unsaturated monocarboxylic acid.

**8.** Copolymer according to any of the preceding Claims, **characterized in that** the copolymer is in the form of a solution copolymerisate or solution copolymer.

9. Copolymer according to any of the preceding Claims, **characterized in that** the copolymer has a glass transition temperature of between 60°C and 140°C, more particularly 80°C and 120°C, preferably 100°C and 120°C.

10. Copolymer according to any of the preceding Claims, **characterized in that** the copolymer is disintegrable or soluble or substantially soluble in an aqueous, pH-neutral environment and/or in an aqueous, alkaline environment.

11. Copolymer according to any of the preceding Claims, **characterized in that** the copolymer is provided or compounded with an impact strength modifier, preferably with an impact modifier reactive towards carboxyl groups, preferably with an impact strength modifier having epoxy groups and/or amino groups.

12. Copolymer according to Claim 11, **characterized in that** the impact strength modifier has a weight fraction of between 10% by weight and 40% by weight, more particularly 12% by weight and 30% by weight, preferably 15% by weight and 25% by weight, based on the total weight of the copolymer provided or compounded with the impact strength modifier.

13. Method for preparing a copolymer according to any of the preceding Claims, wherein acrylic acid and an ester of an $\alpha$-$\beta$-unsaturated monocarboxylic acid are copolymerized in solution.

14. Copolymer compound, comprising a copolymer according to any of Claims 1 to 10 and an impact strength modifier.

15. Method for preparing a copolymer compound according to Claim 14, wherein a copolymer is mixed in the melt with an impact strength modifier under the action of shearing forces, the proportion of copolymer and impact strength modifier being selected preferably such that the copolymer forms the continuous phase and the impact strength modifier forms the discontinuous phase.

## Revendications

1. Copolymère à base d'acide acrylique, le copolymère présentant une masse molaire, exprimée en moyenne en poids et déterminée par chromatographie par perméation de gel, < 100 000 g/mole et comportant en plus de l'acide acrylique, en tant que comonomère, un ester d'un acide monocarboxylique $\alpha,\beta$-insaturé, **caractérisé en ce que** l'acide acrylique présente une proportion en poids > 50 % en poids, par rapport au poids total du copolymère, et une hétérogénéité moléculaire comprise entre 2 et 5.

2. Copolymère selon la revendication 1, **caractérisé en ce que** la masse molaire est comprise entre 25 000 g/mole et 90 000 g/mole, en particulier entre 30 000 g/mole et 85 000 g/mole, de préférence entre 35 000 g/mole et 75 000 g/mole.

3. Copolymère selon la revendication 1 ou 2, **caractérisé en ce que** l'acide acrylique présente une proportion en poids comprise entre 60 % en poids et 95 % en poids, en particulier entre 70 % en poids et 90 % en poids, de préférence entre 75 % en poids et 85 % en poids, par rapport au poids total du copolymère.

4. Copolymère selon l'une quelconque des revendications précédentes, **caractérisé en ce que** le copolymère comporte, en plus de l'acide acrylique, en tant que comonomère, un ester alkylique et/ou un ester alcoxyalkylique d'un acide monocarboxylique $\alpha,\beta$-insaturé.

5. Copolymère selon l'une quelconque des revendications précédentes, **caractérisé en ce que** l'ester de l'acide monocarboxylique $\alpha,\beta$-insaturé est choisi dans le groupe comprenant l'acrylate de méthyle, l'acrylate d'éthyle, l'acrylate de n-butyle, l'acrylate d'isobutyle, l'acrylate de méthoxyéthyle, l'acrylate de glycidyle, le méthacrylate de méthyle, le méthacrylate d'éthyle, le méthacrylate de n-butyle, le méthacrylate d'isobutyle, le méthacrylate de méthoxyéthyle, le méthacrylate de glycidyle et des mélanges de ceux-ci.

6. Copolymère selon l'une quelconque des revendications précédentes, **caractérisé en ce que** l'ester présente une proportion en poids comprise entre 5 % en poids et 40 %, en particulier entre 10 % en poids et 30 % en poids, de préférence entre 15 % en poids et 25 % en poids, par rapport au poids total du copolymère.

7. Copolymère selon l'une quelconque des revendications précédentes, **caractérisé en ce que** le copolymère est un copolymère de l'acide acrylique et de l'ester de l'acide monocarboxylique $\alpha,\beta$-insaturé.

8. Copolymère selon l'une quelconque des revendications précédentes, **caractérisé en ce que** le copolymère se trouve sous forme de copolymérisat en solution ou de copolymère en solution.

9. Copolymère selon l'une quelconque des revendications précédentes, **caractérisé en ce que** le copolymère présente une température de transition vitreuse comprise entre 60 °C et 140 °C, en particulier entre 80 °C et 120 °C, de préférence entre 100 °C et 120 °C.

10. Copolymère selon l'une quelconque des revendications précédentes, **caractérisé en ce que** le copolymère est désintégrable ou soluble ou essentiellement soluble dans un environnement aqueux à pH neutre et/ou dans un environnement aqueux alcalin.

11. Copolymère selon l'une quelconque des revendications précédentes, **caractérisé en ce que** le copolymère est muni d'un ou compoundé avec un modificateur de résistance au choc, de préférence un modificateur de résistance au choc réactif vis-à-vis de groupes carboxy, de préférence un modificateur de résistance au choc comportant des groupes époxy et/ou amino.

12. Copolymère selon la revendication 11, **caractérisé en ce que** le modificateur de résistance au choc présente une proportion en poids comprise entre 10 % en poids et 40 % en poids, en particulier entre 12 % en poids et 30 % en poids, de préférence entre 15 % en poids et 25 % en poids, par rapport au poids total du copolymère muni du ou compoundé avec le modificateur de résistance au choc.

13. Procédé pour la préparation d'un copolymère selon l'une quelconque des revendications précédentes, dans lequel on copolymérise en solution de l'acide acrylique et un ester d'un acide monocarboxylique $\alpha,\beta$-insaturé.

14. Compound copolymère, comprenant un copolymère selon l'une quelconque des revendications 1 à 10 et un modificateur de résistance au choc.

15. Procédé pour la production d'un compound copolymère selon la revendication 14, dans lequel on mélange un copolymère dans la masse fondue avec un modificateur de résistance au choc, sous l'effet de forces de cisaillement, le rapport de quantités du copolymère et du modificateur de résistance au choc étant choisi de préférence de manière que le copolymère constitue la phase continue et le modificateur de résistance au choc la phase discontinue.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0928316 B1
- US 20020115739 A1
- GB 833571 A
- US 4196272 A
- EP 0344589 A1
- CN 1154375 A
- US 6013421 A
- WO 2010045147 A2